Europäisches Patentamt

European Patent Office

Office européen des brevets

(11) Veröffentlichungsnummer: **0 425 817 A2**

## (12) EUROPÄISCHE PATENTANMELDUNG

(21) Anmeldenummer: 90118622.1

(22) Anmeldetag: 27.09.90

(51) Int. Cl.⁵: **B23Q 11/08**

(30) Priorität: 31.10.89 DE 3936212

(43) Veröffentlichungstag der Anmeldung:
08.05.91 Patentblatt 91/19

(84) Benannte Vertragsstaaten:
CH DE FR GB IT LI

(71) Anmelder: **Gebr. Hennig GmbH**
**Dorfstrasse 41**
**W-8045 Ismaning(DE)**

(72) Erfinder: **Hennig, Kurt**
**Georgensteinstrasse 16**
**W-8000 München 71(DE)**

(74) Vertreter: **Tetzner, Volkmar, Dr.-Ing. Dr. jur.**
**Van-Gogh-Strasse 3**
**W-8000 München 71(DE)**

(54) Verfahren zur Herstellung einer Teleskopabdeckung.

(57) Die Erfindung betrifft ein Verfahren zur Herstellung einer Teleskopabdeckung unter Verwendung eines einzigen, im Ausgangszustand geradlinigen Profiles mit einer Nut, in die ein zur Bildung der Deckwand und der Seitenwände bestimmter ebener Materialzuschnitt eingesetzt wird. Dieser Materialzuschnitt und das Profil werden sodann unter Bildung von Deckwand und Seitenwänden gemeinsam abgekantet, wobei die äußere Leiste des Profils im Bereich der beiden Kantlinien unter Bildung einer abgerundeten Außenkontur rißfrei gestreckt wird.

EP 0 425 817 A2

## VERFAHREN ZUR HERSTELLUNG EINER TELESKOPABDECKUNG

Die Erfindung betrifft ein Verfahren (entsprechend dem Oberbegriff des Ansprüches 1) zur Herstellung einer Teleskopabdeckung sowie eine Teleskopabdeckung (gemäß dem Gattungsbegriff des Ansprüches 5).

Ein Verfahren entsprechend dem Oberbegriff des Anspruches 1 sowie eine Teleskopabdeckung gemäß dem Gattungsbegriff des Ansprüches 5 sind durch die EP 0 208 869 bekannt.

Bei diesem von der Anmelderin entwickelten Verfahren findet ein langgestrecktes Verbindungsprofil Verwendung, das eine Nut-Feder-Verbindung zwischen der Deckwand und der Rückwand sowie zwischen den beiden Seitenwänden und der Rückwand gewährleistet. Durch das Verbindungsprofil wird ein sehr einfacher, winkelgerechter Zusammenbau der Deckwand und der Seitenwände mit der Rückwand gewährleistet.

Bei diesem bekannten Verfahren ist vorgesehen, für die Verbindung von Deckwand und Rückwand einerseits und für die Verbindung der Seitenwände mit der Rückwand andererseits jeweils gesonderte Verbindungsprofile zu verwenden, d.h. insgesamt drei Verbindungsprofile, die an den Stoßstellen (d.h. am Übergang von der Deckwand zu den Seitenwänden) auf Gehrung abgelängt sind.

Der Erfindung liegt nun die Aufgabe zugrunde, das Verfahren entsprechend dem Oberbegriff des Ansprüches 1 sowie die Teleskopabdeckung gemäß dem Gattungsbegriff des Ansprüches 5 dahin weiterzuentwickeln, daß die Her stellung der Teleskopabdeckung noch weiter vereinfacht wird.

Diese Aufgabe wird erfindungsgemäß durch die kennzeichnenden Merkmale der Ansprüche 1 und 5 gelöst. Zweckmäßige Ausgestaltungen der Erfindung sind Gegenstand der Unteransprüche.

Erfindungsgemäß findet somit im rückwärtigen Bereich jedes Abdeckelementes ein einziges Profil Verwendung, das im Ausgangszustand geradlinig ist und dessen Länge größer als die Breite des Abdeckelementes ist.

Bei einem bevorzugten Ausführungsbeispiel wird dieses Profil in einem Abstand, der der Breite des Abdeckelementes entspricht, mit zwei dreieckförmigen Aussparungen versehen, die von der den Leisten abgewandten Längskante des Profiles durch die innere Leiste und durch die Nut bis an die äußere Leiste des Profils reichen, so daß die innere Leiste an zwei Stellen unterbrochen wird, während die äußere Leiste über ihre ganze Länge zusammenhängend bleibt.

In die Nut dieses geradlinigen Profiles wird sodann ein zur Bildung der Deckwand und der Seitenwände bestimmter ebener Materialzuschnitt eingesetzt. Dieser ebene Materialzuschnitt und das geradlinige Profil werden sodann unter Bildung von Deckwand und Seitenwänden gemeinsam abgekantet, wobei die zusammenhängende äußere Leiste des Profils im Bereich der beiden Kantlinien unter Bildung einer abgerundeten Außenkontur rißfrei gestreckt wird.

Entgegen allen Erwartungen gelang es bei den der Erfindung zugrundeliegenden Versuchen, die äußere Leiste des Profils im Bereich der beiden Kantlinien rißfrei zu strecken. Dabei erhält diese Eckzone des Profils eine abgerundete Außenkontur, die keiner weiteren nachbearbeitung bedarf. Die von dem gestreckten Material gebildete Eckzone gewährleistet dabei die erforderliche Abdichtung des Endbereiches des Abdeckelementes.

Die abgerundete Außenkontur der beiden Eckzonen des Profiles erweist sich ferner für die Gleitbewegung des Abdeckelementes innerhalb der Teleskopabdeckung als vorteilhat, zumal auch die Deckwand und die beiden Seitenwände des nächstgrößeren Abdeckelementes an ihren Abkantzonen einen gewissen Biegeradius aufweisen.

Die Erfindung wird im folgenden anhand einiger Ausführungsbeispiele näher erläutert. In der Zeichnung zeigen

Fig.1 einen Teil-Längsschnitt durch eine erfindungsgemäße Teleskopabdeckung,

Fig.2 einen Schnitt längs der Linie II-II der Fig.1,

Fig.3 einen Querschnitt durch das als Verbindungselement verwendete Profil,

Fig.4 eine Aufsicht auf das noch nicht abgekantete, jedoch mit zwei Aussparungen versehene Proifil,

Fig.5 das Detail x gemäß Fig.2 in vergrößertem Maßstab,

Fig.6 einen Schnitt durch ein weiteres Ausführungsbeispiel,

Fig.7 eine Schnittansicht längs der Linie VII-VII der Fig.6,

Fig.8 bis 10 Schnitte von drei weiteren Ausführungsbeispielen der Erfindung.

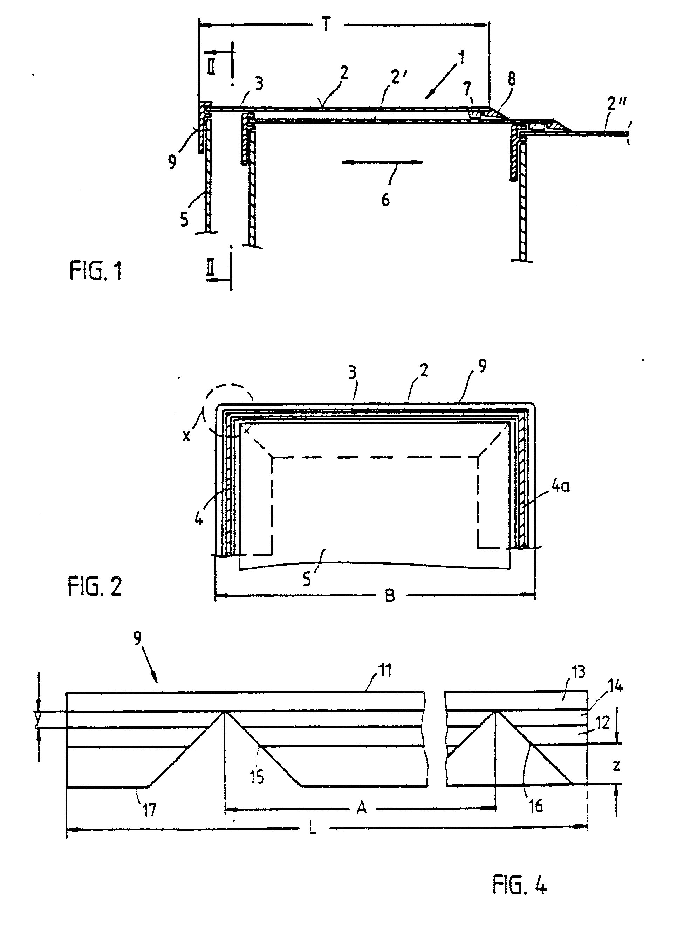

Von der gesamten Teleskopabdeckung 1 sind in Fig.1 lediglich drei Abdeckelemente 2, 2′, 2″ veranschaulicht, die in Längsrichtung der Teleskopabdeckung gegeneinander verschiebbar sind. Da diese Abdeckelemente alle gleichartig ausgebildet sind, genügt im folgenden die Beschreibung des Abdeckelementes 2.

Das Abdeckelement 2 enthält eine Deckwand 3, zwei Seitenwände 4, 4a und eine Rückwand 5. Die Deckwand 3 und die Seitenwände 4, 4a sind hierbei einstückig ausgebildet und werden - wie noch näher erläutert wird - aus einem einteiligen Materialzuschnitt hergestellt.

Im vorderen Bereich des in Richtung des Pfeiles 6 hin und herbeweglichen Abdeckelementes 2 sind an der Unterseite der Deckwand 3 eine Anschlagleiste 7 sowie ein Abstreifelement 8 angeordnet.

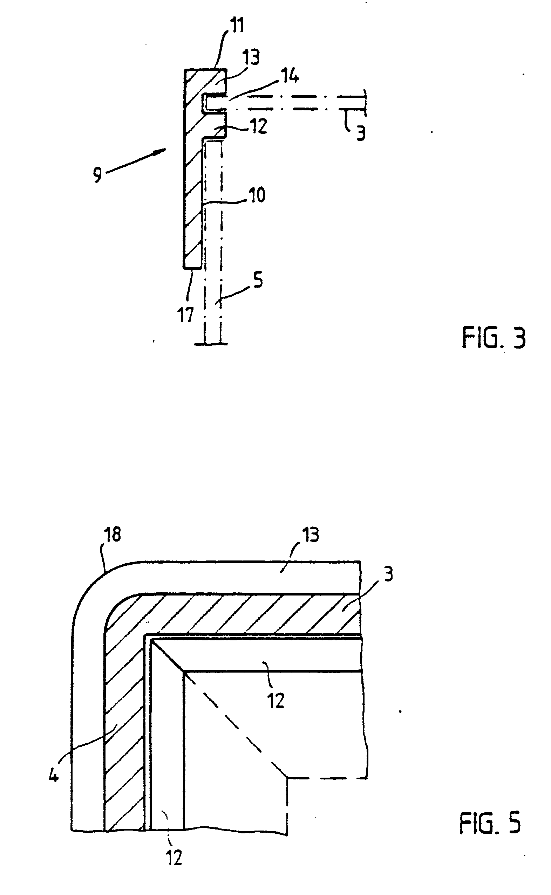

Zur Verbindung der Rückwand 5 mit der Deckwand 3 sowie mit den Seitenwänden 4, 4a dient ein Profil 9, dessen Querschnitt aus Fig.3 ersichtlich ist. Dieses Profil 9 besitzt auf seiner einen Breitseite 10 benachbart zur Längskante 11 zwei in Längsrichtung des Profiles 9 ver laufende parallele Leisten 12, 13, die zwischen sich eine Nut 14 einschließen.

Das Profil 9 ist im Ausgangszustand (vgl. Fig.4) geradlinig und besitzt eine Länge L, die größer als die Breite B (vgl. Fig.2) des Abdeckelementes 2 ist.

Dieses Profil 9 wird nun in einem Abstand A, der der Breite B des Abdeckelementes 2 entspricht, mit zwei dreieckförmigen Aussparungen 15, 16 versehen. Sie reichen von der den Leisten 12, 13 abgewandten Längskante 17 des Profils 9 durch die innere Leiste 12 und durch die Nut 14 bis an die äußere Leiste 13, so daß die innere Leiste 12 an zwei Stellen (nämlich im Bereich der Aussparungen 15 und 16) unterbrochen ist, während die äußere Leiste 13 über die ganze Länge des Profiles zusammenhängend ist.

Die Herstellung des Abdeckelementes 2 nach dem erfindungsgemäßen Verfahren geschieht damit folgendermaßen:

Das im Ausgangszustand geradlinige Profil 9 wird zunächst mit den anhand von Fig.3 erläuterten Aussparungen 15 und 16 versehen. In die Nut 14 dieses geradlinigen Profiles wird sodann ein ebener Materialzuschnitt eingesetzt, der zur Bildung der Deckwand 3 und der beiden Seitenwände 4 und 4a bestimmt ist.

Sodann werden dieser ebene Materialzuschnitt und das geradlinige Profil 9 unter Bildung der Deckwand 3 und der Seitenwände 4, 4a gemeinsam abgekantet. Hierbei wird die zusammenhängende äußere Leiste 13 des Profiles 9 im Bereich der beiden Kantlinien unter Bildung einer abgerundeten Außenkontur 18 rißfrei gestreckt, wie dies schematisch in Fig.5 veranschaulicht ist.

Die Verbindung zwischen dem Profil 9 und der Deckwand 3 und den Seitenwänden 4, 4a kann durch Verschweißen erfolgen, wobei die Schweißverbindung entweder vor oder nach dem Abkantvorgang hergestellt werden kann.

Soll das Abdeckelement wie im erläuterten Ausführungsbeispiel angenommen - mit einer Rückwand 5 versehen werden, so wird diese Rückwand nach dem erläuterten Abkanten von Profil 9 und Materialzuschnitt (der die Deckwand 3 und die Seitenwände 4 und 4a bildet) mit dem Profil 9 verbunden. Hierbei liegt die Rückwand 5 zweckmäßig angrenzend an die innere Leiste 12 flach auf der Breitseite 10 des Profiles 9 auf (vgl. Fig.3, in der die Lage von Deckwand 3 und Rückwand 5 strichpunktiert veranschaulicht ist).

Im Rahmen der Erfindung ist es jedoch auch möglich, die Abdeckelemente rückwandfrei auszubilden. In diesem Falle können nach dem Abkanten des ebenen Blechzuschnittes (der die Deckwand 3 und die Seitenwände 4, 4a bildet) und des geradlinigen Profiles 9 Gleitelemente mit dem Profil 9 verbunden werden. Diese Gleitelemente stützen sich in bekannter Weise beispielsweise auf der Führungsbahn einer Werkzeugmaschine ab, zu deren Schutz die Teleskopabdeckung bestimmt ist.

Das Profil 9 bildet mit seiner über die Deckwand 3 nach oben vorstehenden Leiste 13 einen Anschlag, der mit der Anschlagleiste 7 des nächstgrößeren Abdeckelementes zusammenwirkt und dafür sorgt, daß beim Auseinanderfahren der Teleskopabdeckung das betreffende Abdeckelement von dem nächstgrößeren Abdeckelement mitgenommen wird.

Die Breite der Nut 14 des Profiles 9 (Maß y in Fig.4) wird entsprechend der Materialstärke des für die Bildung von Deckwand 3 und Seitenwänden 4, 4a verwendeten Materialzuschnittes gewählt.

Das Maß z (vgl. Fig.4) ist gleichfalls variabel und wird entsprechend der für die Befestigung der Rückwand 5 (bzw. von Gleitelementen) benötigten Auflagefläche gewählt.

Das Profil 9 kann beispielsweise aus Messing hergestellt werden, während Deckwand, Seitenwände und Rückwand des Abdeckelementes aus Stahlblech gefertigt werden.

Im Rahmen der Erfindung sind jedoch auch zahlreiche andere Materialkombinationen möglich. So können insbesondere auch Aluminium und Kunststoffmaterialien Verwendung finden. Auch Verbundmaterialien sowie Armierungen sind selbstverständlich möglich.

Es versteht sich ferner, daß die Rückwand 5 gewünschtenfalls in ihrem oberen Bereich als Rinne ausgebildet werden kann, um Flüssigkeit abzuführen.

Ein besonderer Vorteil des erfindungsgemäßen Verfahrens besteht schließlich darin, daß die für den Abkantvorgang verwendete Maschine nur eine Abkantlänge entsprechend der Tiefe T (vgl. Fig.1) der Abdeckelemente besitzen muß, da die Rückwand nicht durch Abkanten er zeugt werden muß, sondern flach an das Profil 9 angesetzt wird.

Die Verbindung des zur Bildung der Deckwand und der Seitenwände bestimmten ebenen Materialzuschnitts mit dem geradlinigen Profil kann in Form einer Klemm-, Schweiß-, Schraub- oder Klebverbindung oder auch durch eine Kombination dieser Verbindungsarten hergestellt werden. Vorteilhaft sind ferner auch induktive Schweißverfahren, bei denen das Schweißmaterial in Form eines Schweißdrahtes in den Boden der Nut eingelegt wird.

Alle Verbindungen können dabei entweder vor oder nach dem Abkantvorgang hergestellt werden.

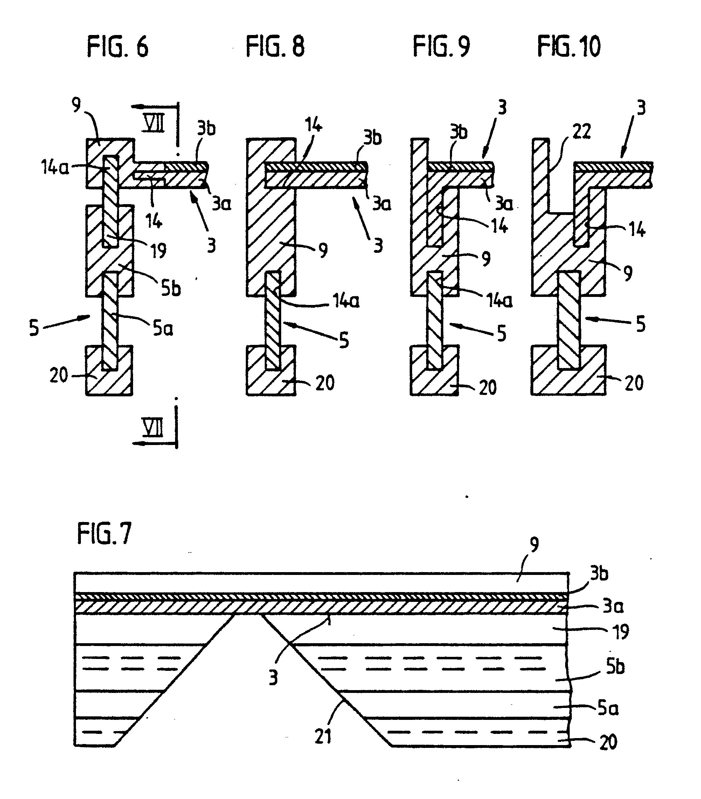

Bei dem in den Fig.6 und 7 veranschaulichten weiteren Ausführungsbeispiel enthält das Profil 9 zwei Nuten 14, 14a, die etwa rechtwinklig zueinander angeordnet sind. Die Nut 14 dient wiederum zur Aufnahme der Deckwand 3, die bei diesem Ausführungsbeispiel aus einer Kunststoffschicht 3a und einer metallischen Auflage 3b besteht.

In die Nut 14a greift ein Verbindungselement 19 ein, das das Profil 9 mit der Rückwand 5 verbindet. Die Rückwand 5 besteht bei dem Ausführungsbeispiel der Fig.6 und 7 aus einem Rückwandteil 5a und einem rahmenartigen Aussteifungsprofil 5b. An der Unterseite trägt die Rückwand 5 Gleiter 20.

Wie die Schnittdarstellung gemäß Fig.7 erkennen läßt, weist die Rückwand 5 an den beiden Abkantstellen (von denen in der Fig.7 nur eine dargestellt ist) eine trapezförmige Aussparung 21 auf, die bis an die Deckwand 3 heranreicht. Bei diesem Ausführungsbeispiel enthält somit das Profil 9 keine Aussparung an den Abkantstellen. Im Hinblick auf seine verhältnismäßig geringe Höhe läßt es sich trotzdem jedoch beim Abkantvorgang rißfrei unter Bildung einer abgerundeten Außenkontur strecken.

Bei dem Ausführungsbeispiel gemäß Fig.8 ist das Profil 9 wieder mit zwei Nuten 14 und 14a versehen, von denen die Nut 14 zur Aufnahme der Deckwand 3 (und der in Fig. 8 nicht sichtbaren Seitenwände 4, 4a) dient, während in die Nut 14a die Rückwand 5 eingreift.

Bei diesem Ausführungsbeispiel wird nicht nur die Rückwand 5, sondern auch das Profil 9 an den beiden Abkantstellen mit einer bis an die Deckwand 3 heranreichenden, dreieck- oder trapezförmigen Aussparung (entsprechend den Aussparungen 15, 16 in Fig.2 bzw. entsprechend der Aussparung 21 in Fig.7) versehen.

Bei der in Fig.9 veranschaulichten Variante liegen die Nuten 14 und 14a übereinander und parallel zueinander. Die Deckwand 3 ist an ihrem zum Eingriff in die Nut 14 bestimmten Rand abgewinkelt. Der über die Deckwand 3 nach oben vorstehende Teil des Profiles 9 bildet bei diesem Ausführungsbeispiel (ebenso wie bei allen anderen Varianten) einen Anschlag für die Mitnahme des nächst größeren Abdeckelementes.

Die in Fig.10 veranschaulichte Variante entspricht weitgehend der Ausführung gemäß Fig.9. Angrenzend an die zur Aufnahme der Deckwand 3 bestimmte Nut 14 ist jedoch bei diesem Ausführungsbeispiel im Profil 9 eine nach oben offene Flüssigkeitsrinne 22 vorgesehen.

**Ansprüche**

1. Verfahren zur Herstellung einer Teleskopabdekkung, insbesondere für Werkzeugmaschinen, bestehend aus einer Anzahl von in Längsrichtung der Teleskopabdeckung gegeneinander verschiebbaren Abdeckelementen (2, 2′, 2″), die jeweils zumindest eine Deckwand (3) und zwei Seitenwände (4, 4a) enthalten, wobei ein Verbindungselement mit einer zur Aufnahme der Deckwand bzw. der Seitenwände bestimmten Nut (14) Verwendung findet, gekennzeichnet durch folgende Verfahrensmerkmale:

a) für jedes Abdeckelement findet als Verbindungselement ein einziges, im Ausgangszustand geradliniges Profil (9) Verwendung, dessen Länge (L) größer als die Breite (B) des Abdeckelementes ist;

b) in die Nut (14) dieses geradlinigen Profiles (9) wird ein zur Bildung der Deckwand (3) und der Seitenwände (4, 4a) bestimmter ebener Materialzuschnitt eingesetzt;

c) der ebene Materialzuschnitt und das geradlinige Profil werden sodann an zwei Abkantstellen gemeinsam abgekantet, wobei das Profil im Bereich der beiden Abkantstellen unter Bildung einer abgerundeten Außenkontur rißfrei gestreckt wird.

2. Verfahren nach Anspruch 1, gekennzeichnet durch folgende Merkmale:

a) Als Verbindungselement findet ein Profil (9) Verwendung, das auf einer Breitseite (10) des Profiles benachbart zur einen Längskante (11) des Profiles zwei in Längsrichtung des Profiles verlaufende parallele Leisten (12, 13) enthält, die zwischen sich die Nut (14) bilden;

b) dieses Profil (9) wird in einem Abstand (A), der der Breite (B) des Abdeckelementes (2) entspricht, mit zwei dreieckförmigen Aussparungen (15, 16) versehen, die Von der den Leisten (12, 13) abgewandten Längskante (17) des Profils durch die innere Leiste (12) und durch die Nut (14) hindurch bis an die äußere Leiste (13) des Profils reichen, so daß die innere Leiste (12) an zwei Stellen unterbrochen wird, während die äußere Leiste (13) über ihre ganze Länge zusammenhängend bleibt.

3. Verfahren nach Anspruch 1 zur Herstellung einer Teleskopabeckung, deren Abdeckelemente jeweils auch eine Rückwand (5) aufweisen, die flach auf einer Breitseite (10) des Profils (9) aufliegt, dadurch gekennzeichnet, daß nach dem Abkanten des ebenen Materialzuschnitts und des geradlinigen Profils (9) die Rückwand (5) mit dem Profil (9) verbunden wird.

4. Verfahren nach Anspruch 1 zur Herstellung einer Teleskopabdeckung, deren Abdeckelemente rückwandfrei ausgebildet sind, dadurch gekennzeichnet, daß nach dem Abkanten des ebenen Materialzuschnitts und des geradlinigen Profils (9) Gleitelemente mit dem Profil verbunden werden.

5. Teleskopabdeckung, insbesondere für Werkzeugmaschinen,

a) bestehend aus einer Anzahl von in Längsrichtung der Teleskopabdeckung (1) gegeneinander verschiebbaren Abdeckelementen (2, 2', 2''), die jeweils zumindest eine Deckwand (3) und zwei Seitenwände (4, 4a) enthalten,

b) wobei ein Verbindungselement mit einer zur Aufnahme der Deckwand bzw. der Seitenwände bestimmten Nut vorgesehen ist, gekennzeichnet durch folgende Merkmale:

c) als Verbindungselement ist für jedes Abdeckelement ein einziges, im Ausgangszustand geradliniges Profil (9) vorgesehen, dessen Länge (L) größer als die Breite (B) des Abdeckelementes (2) ist;

d) das Profil (9) sowie ein in die Nut (14) des Profils eingesetzter, die Deckwand (3) und die Seitenwände (4, 4a) bildender Materialzuschnitt sind gemeinsam abgekantet, wobei das Profil (9) im Bereich der beiden Abkantstellen unter Bildung einer abgerundeten Außenkontur rißfrei gestreckt ist.

6. Teleskopabdeckung nach Anspruch 5, gekennzeichnet durch folgende Merkmale:

a) das Profil (9) enthält auf einer Breitseite (10) des Profiles benachbart zur einen Längskante (11) des Profiles zwei in Längsrichtung des Profiles verlaufende parallele Leisten (12, 13), die zwischen sich eine Nut (14) einschließen, in die der die Deckwand (3) und die Seitenwände (4, 4a) bildende Materialzuschnitt eingesetzt ist;

b) die innere Leiste (12) des Profiles (9) ist im Bereich der beiden Kantlinien des die Deckwand (3) und die beiden Seitenwände (4, 4a) bildenden Materialzuschnitts durch einen Gehrungsschnitt unterbrochen, während die über ihre ganze Länge zusammenhängende äußere Leiste (13) dieses Profils im Bereich dieser beiden Kanten rißfrei gestreckt ist und die abgerundete Außenkontur bildet.

7. Teleskopabdeckung nach Anspruch 5, dadurch gekennzeichnet , daß das Profil (9) eine zur Aufnahme einer Rückwand (5) bestimmte weitere Nut (14a) aufweist.

8. Teleskopabdeckung nach Anspruch 7, dadurch gekennzeichnet, daß die Rückwand (5) und das Profil (9) an den beiden Abkantstellen eine bis an die Deckwand (3) heranreichende trapezförmige Aussparung aufweisen.

9. Teleskopabdeckung nach Anspruch 8, dadurch gekennzeichnet, daß die Rückwand (5) ein durch die beiden trapezförmigen Aussparungen (21) unterbrochenes, rahmenartiges Aussteifungsprofil (5b) aufweist.

10. Teleskopabdeckung nach Anspruch 5, dadurch gekennzeichnet, daß das Profil (9) - vorzugsweise angrenzend an die zur Aufnahme des die Deckwand (3) und die Seitenwände (4, 4a) bildenden Materialzuschnitts bestimmte Nut (14) - eine nach oben offene Flüssigkeitsrinne (22) bildet.

FIG. 1

FIG. 2

FIG. 4

FIG. 3

FIG. 5

7

FIG. 6

FIG. 8

FIG. 9

FIG.10

FIG.7